# EUROPÄISCHE PATENTSCHRIFT

(11) **EP 3 768 898 B1**
(45) Veröffentlichungstag und Bekanntmachung des Hinweises auf die Patenterteilung: **10.12.2025**
(21) Anmeldenummer: 19714128.6
(22) Anmeldetag: 18.03.2019
(51) Int. Cl.: E02D 27/42, F03D 13/20, E04H 12/22

(54) **HALBFERTIGTEIL FÜR EIN FUNDAMENT EINES TURMBAUWERKS, HALBFERTIGTEIL-FUNDAMENTSEGMENT, FUNDAMENT, VERFAHREN ZUM HERSTELLEN EINES HALBFERTIGTEILS SOWIE VERFAHREN ZUM HERSTELLEN EINES FUNDAMENTS**
SEMI-FINISHED PART FOR A FOUNDATION OF A TOWER CONSTRUCTION, SEMI-FINISHED PART FOUNDATION SEGMENT, FOUNDATION, METHOD FOR PRODUCING A SEMI-FINISHED PART AND METHOD FOR PRODUCING A FOUNDATION
PIÈCE SEMI-FINIE POUR UNE FONDATION D'UNE CONSTRUCTION EN FORME DE TOUR, SEGMENT DE FONDATION EN LA PIÈCE SEMI-FINIE, FONDATION, PROCÉDÉ SERVANT À FABRIQUER UNE PIÈCE SEMI-FINIE, ET PROCÉDÉ SERVANT À FABRIQUER UNE FONDATION

(30) Priorität: 23.03.2018 DE 102018106998
(43) Veröffentlichungstag der Anmeldung: 27.01.2021
(73) Patentinhaber: Wobben Properties GmbH, 26607 Aurich (DE)
(72) Erfinder: MERTENS, René, 16515 Oranienburg (DE); BRENNER, Albrecht, 26607 Aurich (DE); BOETTCHER, Bernd, 26607 Aurich (DE)
(74) Vertreter: Eisenführ Speiser
(86) Internationale Anmeldenummer: PCT/EP2019/056655
(87) Internationale Veröffentlichungsnummer: WO 2019/179914

(56) Entgegenhaltungen:
- WO-A1-2016/187720
- US-A1- 2016 230 365

## Beschreibung

Die Erfindung betrifft ein Halbfertigteil für ein Fundament eines Turmbauwerks mit mindestens zwei Halbfertigteil-Fundamentsegmenten, ein Halbfertigteil-Fundamentsegment für ein Halbfertigteil, ein Fundament mit einem auf einer Fundamentgrundfläche angeordneten Halbfertigteil sowie die Verwendung eines Halbfertigteil-Fundamentsegments zum Herstellen eines Halbfertigteils und/oder zum Herstellen eines Fundaments. Darüberhinaus betrifft die Erfindung ein Verfahren zum Herstellen eines Halbfertigteils sowie ein Verfahren zum Herstellen eines Fundaments.

Fundamente stellen einen Unterbau eines Bauwerks dar und sind in der Regel ausgebildet, um sämtliche Lasten des entstehenden Bauwerks zu tragen und diese in den Baugrund abzuleiten. Für größere Bauwerke, beispielsweise Brücken oder Türme, insbesondere Windenergieanlagentürme, die Höhen von über 100 m aufweisen können und die im Betrieb hohen Belastungen ausgesetzt sind, müssen Fundamente entsprechend hohen Anforderungen genügen. Durch sicheres Ableiten von auf das Bauwerk wirkenden Kräften und Drehmomenten können unerwünschte Bewegungen oder Verformungen der auf dem Fundament platzierten Bauwerke verhindert werden. Hierzu sind die Fundamente in der Regel besonders schwer, steif und schwingungsfest ausgebildet.

Die Fundamente müssen zudem hohen Anforderungen hinsichtlich der Lebensdauer genügen. Üblicherweise werden Fundamente vor Ort an einer Baustelle hergestellt. Gemäß DE 102 26 996 werden Fundamente hergestellt beispielsweise durch Ausheben eines Fundamentbetts, Erstellung einer stabilen, im Wesentlichen eben und horizontal verlaufenden Sauberkeitsschicht in dem Fundamentbett, Aufsetzen eines Fundamentsegments des Bauwerkes auf der Sauberkeitsschicht, wobei an dem Fundamentsegment verteilt mindestens drei höhenverstellbare Stützstangen fest mittels jeweils eines am Ende der Stützstangen angebrachten Stützfußes derart angebracht sind, dass nur die Stützstangen auf vorgegebenen Stützpunkten der Sauberkeitsschicht abgestellt werden, Herstellen einer Bewehrung auf der Sauberkeitsschicht, Aufgießen des restlichen Fundamentbetts mit Fundamentmasse, insbesondere Beton, bis über den unteren Rand des Fundamentsegments hinaus. Hierbei sind die Qualität und damit die Lebensdauer des Fundaments auch abhängig von den während der Herstellung herrschenden Umgebungsbedingungen.

Aus DE 103 21 647 ist beispielsweise ein Fundament mit vorgefertigten tragenden und seitlich stabilisierenden Elementen bekannt.

DE 10 2013 216 343 offenbart ein Windenergieanlagen-Fundament mit einer Mehrzahl von Betonfertigteil-Fundamentsegmenten. Die Fundamentsegmente weisen eine Mehrzahl von ersten und zweiten Hüllerohren auf, welche dazu dienen, Spannlitzen zur Verspannung der Fundamentsegmente aufzunehmen.

Existierende Lösungen gewährleisten eine sichere Ableitung der auf das Bauwerk wirkenden Kräfte und Drehmomente. Die Herstellung bedarf hierbei eines relativ hohen Zeit- und Personaleinsatzes. Darüberhinaus können vor Ort hergestellte Fundamente im Nachhinein oftmals nicht wieder zugänglich gemacht werden. Hinzukommen in der Regel aufwändige Vor- und Nacharbeiten, beispielsweise durch Auf- und Abbau sowie Reinigung einer Schalung zum Gießen der Fundamente.

Das Deutsche Patent- und Markenamt hat in der Prioritätsanmeldung zur vorliegenden Anmeldung folgenden Stand der Technik recherchiert: US 2015/0 376 859 A1, WO 2015/059 008 A1, DE 102 26 996 A1, DE 10 2013 216 343 A1, DE 103 21 647 A1.

Die WO 2016/187720 A1 beschreibt eine Baugruppe, die als Basis für einen Windturbinenturm oder eine andere große Struktur dienen kann, mit einer hohlen, durchgehenden Baugruppe, die aus einzelnen Modulen zusammengesetzt ist.

Der Erfindung liegt daher die Aufgabe zu Grunde, wenigstens eines der genannten Probleme zu adressieren. Insbesondere ist es eine Aufgabe der vorliegenden Erfindung eine Lösung bereitzustellen, die eine sichere Ableitung der auf ein Bauwerk, insbesondere auf einen Windenergieanlagenturm, wirkenden Kräfte und Drehmomente mittels eines einfach und/oder kostengünstig herstellbaren Fundaments gewährleistet. Ferner ist es insbesondere eine Aufgabe der vorliegenden Erfindung ein schnell herstellbares Fundament bereitzustellen. Zumindest soll zu bisher bekannten Lösungen eine alternative Lösung gefunden werden.

Gemäß einem ersten Aspekt wird die eingangs genannte Aufgabe gelöst durch ein Halbfertigteil-Fundamentsegment gemäß Anspruch 1 und ein Halbfertigteil für ein Fundament eines Turmbauwerks, insbesondere eines Windenergieanlagenturms, gemäß Anspruch 3.

Der Erfindung liegt die Erkenntnis zugrunde, dass das Herstellen eines Fundaments an einer Baustelle aufwändige und zeitintensive Arbeitsschritte umfasst, wie zum Beispiel die Durchführung von Bewehrungsarbeiten. Zwar können derartige Baustellenaktivitäten grundsätzlich durch den Einsatz von Betonfertigteilen und/oder Betonfertigteilsegmenten reduziert werden. Aufgrund der erforderlichen Größe und insbesondere damit einhergehend dem Gewicht der Betonfertigteile und/oder der Betonfertigteilsegmente, sind diese jedoch lediglich für Fundamente kleinerer Bauwerke praktikabel.

In der hier beschriebenen Lösung wird auch ein Halbfertigteil zur Herstellung eines Fundaments bereitgestellt, das mindestens zwei, vorzugsweise mehrere, Halbfertigteil-Fundamentsegmente umfasst. Die Halbfertigteil-Fundamentsegmente umfassen jeweils ein Außenbegrenzungselement und eine mit dem Außenbegrenzungselement verbundene Bewehrung. Die Halbfertigteil-Fundamentsegmente sind hierbei derart angeordnet und/oder ausgerichtet, dass sich Streben der Bewehrung vorzugsweise einseitig aus dem Außenbegrenzungselement erstrecken. Die Streben erstrecken sich hierbei aus den Außenbegrenzungselementen in einen Innenraum des Halbfertigteils. Der Innenraum wird durch die Außenbegrenzungselemente der Halbfertigteil-Fundamentsegmente, die einen Außenrand des Halbfertigteils bilden, begrenzt. Zur Herstellung des Fundaments kann der Innenraum des Halbfertigteils mit Beton oder einem anderen Verbundmaterial zu einem Gesamtquerschnitt ergänzt werden.

Durch derartige Halbfertigteile können die Ortbeton- und Fertigteilbauweise miteinander kombiniert werden. Der Außenrand kann als eine Schalung dienen, um den Innenraum zu begrenzen und mit Verguss, insbesondere bevorzugt mit Beton, ausgefüllt werden. Nach einem Aushärten des Vergusses kann so vorzugsweise ein monolithisches Gebilde mit hoher Festigkeit entstehen. Insbesondere muss der Außenrand nach dem Aushärten von dem Fundament nicht gelöst und/oder entfernt werden, sondern bildet vorzugsweise einen Teil des monolithischen Gebildes.

Derartige Halbfertigteile und insbesondere die kombinierte Bauweise sind dahingehend vorteilhaft, dass ein schalungsfreier Bau mit einer wesentlich verkürzten Bauzeit gewährleistet werden kann. Darüberhinaus ist ein Gewicht des Halbfertigteils gegenüber Betonfertigteilen und/oder Betonhalbfertigteilen reduziert, sodass Transport- und/oder Installationskosten deutlich reduziert werden können.

Durch eine Unterteilung des Halbfertigteils in mindestens zwei, vorzugsweise mehrere, Halbfertigteil-Fundamentsegmente kann ein Gewicht und/oder eine Größe einzelner zu transportierender und/oder installierender Elemente weiter reduziert werden, sodass die Transport- und/oder Installationskosten weiter gesenkt werden können. Insbesondere kann hierdurch ein Transport eines Halbfertigteils bzw. der Halbfertigteil-Fundamentsegmente insbesondere für ein Fundament größerer Bauwerke erst ermöglicht werden.

Aus diesem Grund eignen sich die Halbfertigteile sowohl für ein Fundament kleinerer Bauwerke als auch großer Bauwerke, insbesondere bevorzugt für Turmbauwerke, wie zum Beispiel Pfeiler, Türme oder allgemein pfahlartige Bauwerke. Darüberhinaus können durch die Ausgestaltung der Halbfertigteile auch Fundamente hergestellt werden, die sich zur Aufnahme eines Windenergieanlagenturms, vorzugsweise mit einer Mehrzahl von Turmsegmenten, eignen.

Ein Fundament mit derartigen Halbfertigteilen kann deutlich kostengünstiger und/oder schneller und/oder einfacher hergestellt werden, als bekannte Lösungen zum Herstellen eines Fundaments. Mithin können der Personal- und/oder der Zeitaufwand reduziert und/oder Kosten eingespart werden. Ferner können durch derartig hergestellte Fundamente Turmbauwerke auch insgesamt kostengünstiger und/oder schneller und/oder einfacher hergestellt werden. Insbesondere können die Baustellenaktivitäten zur Herstellung des Fundaments deutlich reduziert werden.

Ein weiterer Vorteil derartiger Halbfertigteile ist darin zu sehen, dass die einzelnen Halbfertigteil-Fundamentsegmente in einer geschützten Umgebung unter gleichen Bedingungen hergestellt werden können. Ferner kann eine Qualitätskontrolle durchgeführt werden, um eine gleichbleibend hohe Qualität der Halbfertigteil-Fundamentsegmente und damit auch der Halbfertigteile sowie der Fundamente gewährleisten zu können.

Darüberhinaus kann ein Bodenaushub nach einer Positionierung der Halbfertigteil-Fundamentsegmente bzw. des Halbfertigteils direkt am Rand wieder verfüllt werden. Dadurch kann die Zugänglichkeit des Fundaments gewährleistet werden und das Befüllen mit Verguss vereinfacht werden. Ein weiterer Vorteil des Halbfertigteils ist insbesondere eine flexible und/oder individuelle Ausgestaltung und/oder Anpassung einzelner Halbfertigteil-Fundamentsegmente und damit einhergehend des Halbfertigteils sowie des Fundaments.

Die Halbfertigteil-Fundamentsegmente können in einem Einbauzustand zu einem Halbfertigteil zusammengesetzt werden. Hierbei können die Halbfertigteil-Fundamentsegmente, vorzugsweise in einem Bodenaushub, derart angeordnet werden, dass die Außenbegrenzungselemente der Halbfertigteil-Fundamentsegmente vorzugweise im Wesentlichen vertikal ausgerichtet sind. Die Streben können sich insbesondere in einem Winkel, vorzugsweise im Wesentlichen orthogonal, zu dem jeweiligen Außenbegrenzungselement erstrecken. Vorzugsweise bilden die einzelnen Halbfertigteil-Fundamentsegmente im Einbauzustand zusammen das Halbfertigteil, wobei sich die Streben radial von dem Außenrand des Halbfertigteils in den Innenraum erstrecken und vorzugsweise aufeinander zulaufen.

Im Einbauzustand können die Streben vorzugsweise im Wesentlichen horizontal ausgerichtet sein. Vorzugsweise werden Horizontalstreben vorliegend als Streben bezeichnet.

Unter einer Bewehrung kann insbesondere eine räumliche Strebenkonstruktion verstanden werden, die mindestens sich im Einbauzustand im Wesentlichen horizontal erstreckende Streben umfasst. Die Bewehrung in einem Fundament dient zur Verstärkung des Tragverhaltens im Verbund mit einem Beton oder einem anderen Verbundmaterial des Fundaments. Da Beton oder andere Verbundmaterialien, die für den Fundamentbau eingesetzt werden können, oftmals eine geringe Zugfestigkeit aufweisen und im Wesentlichen auftretende Druckkräfte aufnehmen können, ist eine Bewehrung vorteilhaft, um auftretende Zug- und Biegezugkräfte aufnehmen zu können. Die Bewehrung kann vorzugsweise Stäbe oder Fasern aus Materialien hoher Zugfestigkeit, wie zum Beispiel Metall, insbesondere Stahl, Glas und/oder Kohlenstoff, umfassen.

Fundamente können vorzugsweise einen in der Regel ringförmigen oder einen runden, vorzugsweise einen kreisrunden Querschnitt orthogonal zu einer Vertikalachse aufweisen. Insbesondere bevorzugt können Fundamente an die Geometrie eines Turmbauwerks, insbesondere einen Windenergieanlagenturm, angepasst sein. Turmbauwerke können beispielsweise in der Regel einen ringförmigen Querschnitt orthogonal zu der vertikalen Längsachse aufweisen. Dieser ringförmige Querschnitt kann kreisringförmig ausgebildet sein oder auch eine polygonale Form aufweisen. Unter dem Begriff ringförmig ist daher vorliegend nicht nur eine kreisringförmige Ausgestaltung zu verstehen, sondern auch eine polygonale und/oder mehreckige Ausgestaltung mit mehreren geraden Abschnitten. Vorzugsweise kann das Halbfertigteil im Wesentlichen rund, vorzugsweise kreisrund, ausgebildet sein. Das Halbfertigteil kann im Querschnitt orthogonal zu einer Vertikalachse ringförmig oder polygonal, insbesondere quadratisch und/oder rechteckig ausgebildet sein, beispielsweise wenn ein polygonales, insbesondere quadratisches und/oder rechteckiges Fundament gebildet werden soll. In der vorliegenden Beschreibung werden teilweise Ausgestaltungen anhand einer ringförmigen Geometrie beschrieben. Diese sind jedoch ebenso auf andere, auch hier vorstehend beschriebene Ausgestaltungen anwendbar.

Die Streben der Bewehrung können sich vorzugsweise im Einbauzustand über einen wesentlichen Bereich des Innenraums des Halbfertigteils erstrecken. Die Länge der Streben kann hierbei vorzugsweise größer als 1/2 des Radius des Halbfertigteils, 2/3 des Radius des Halbfertigteils, 3/4 des Radius des Halbfertigteils, 4/5 des Radius des Halbfertigteils, 5/6 des Radius des Halbfertigteils, 6/7 des Radius des Halbfertigteils, 7/8 des Radius des Halbfertigteils, 8/9 des Radius des Halbfertigteils oder 9/10 des Radius des Halbfertigteils sein. Alternativ kann die Länge der Streben vorzugsweise in etwa dem Radius des Halbfertigteils entsprechen. Ferner kann die Länge der Streben vorzugweise größer als ein Radius des Halbfertigteils sein. Hierbei können vorzugsweise die den Außenbegrenzungselementen gegenüberliegende Enden der Streben der Halbfertigteil-Fundamentsegmente des Halbfertigteils überlappen. Der Radius des Halbfertigteils kann sich hierbei vorzugsweise auf einen Querschnitt des Innenraums des Halbfertigteils oder einen Inkreis des Querschnitts des Innenraums des Halbfertigteils oder einen Umkreis des Querschnitts des Innenraums des Halbfertigteils beziehen.

Vorzugsweise können die Streben gerade oder bogenförmig gekrümmt sein. Die Streben können auch gerade und/oder bogenförmige Abschnitte aufweisen.

Das Außenbegrenzungselement kann vorzugsweise als Beton vergossenes Schalungselement dienen. Alternativ kann das Außenbegrenzungselement ein Verbundmaterial umfassen. Insbesondere bevorzugt kann das Außenbegrenzungselement dasselbe Material wie ein Verguss des Fundaments oder ein mit dem Material des Vergusses des Fundaments kompatibles Material umfassen. Ferner kann das Außenbegrenzungselement vorzugsweise bewehrt sein. Darüber hinaus können die Streben der Bewehrung in dem Außenbegrenzungselement befestigt, vorzugsweise verankert, sein.

Ferner ist das Außenbegrenzungselement flächig ausgestaltet. Hierbei weist das Außenbegrenzungselement eine Erstreckung in einer Flächenebene in Richtung einer Höhe und einer Breite des Außenbegrenzungselements auf, die um ein Vielfaches größer ist als eine Erstreckung in Richtung einer Dicke des Außenbegrenzungselements. Die Höhe des Außenbegrenzungselements erstreckt sich im Einbauzustand im Wesentlichen in vertikaler Richtung. Die Breite des Außenbegrenzungselements erstreckt sich im Einbauzustand im Wesentlichen in Umfangsrichtung des Außenrands des Halbfertigteils. Die Flächenebene und/oder das Außenbegrenzungselement können vorzugsweise gerade oder gewölbt, insbesondere bevorzugt konvex, oder ringförmig oder schalenförmig ausgebildet sein.

Vorzugsweise kann das Außenbegrenzungselement eine Breite aufweisen, die insbesondere bevorzugt kleiner 10,0 m, 8,0 m, 6,0 m, 5,0 m, 4,8 m, 4,5 m, 4,3 m, 4,0 m, 3,8 m, 3,5 m, 3,3 m, 3,0 m, 2,5 m, 2,0 m, 1,5 m oder 1,0 m sein kann. Insbesondere bevorzugt kann jedes Außenbegrenzungselement eine derart große Breite aufweisen, dass die Außenbegrenzungselemente der Halbfertigteil-Fundamentsegmente zusammengesetzt im Einbauzustand im Wesentlichen den Außenrand bilden. Insbesondere kann das Außenbegrenzungselement eine Breite aufweisen, die vorteilhaft ist, um die Halbfertigteil-Fundamentsegmente transportieren zu können.

Der Außenrand ist im Einbauzustand vorzugsweise im Wesentlichen vertikal ausgerichtet. Darüberhinaus kann der Außenrand vorzugsweise umlaufend und/oder in sich geschlossen sein. Alternativ hierzu kann der Außenrand geschlossen sein und zusätzlich zu dem Außenbegrenzungselement der Halbfertigteil-Fundamentsegmente mindestens ein zusätzliches Einbauelement und/oder Wandelement, beispielsweise eine Schalung, die nach dem Verguss des Fundaments wieder entfernt wird, umfassen. Hierbei können vorzugsweise die Außenbegrenzungselemente und das mindestens eine Einbauelement und/oder eine Wandelement vorzugsweise auch einen in sich geschlossenen, umlaufenden Außenrand bilden.

Vorzugsweise kann eine Höhe des Außenrands im Wesentlichen eine Höhe des Halbfertigteils sowie nach dem Verguss eine Höhe des Fundaments und damit eine Fundamentoberfläche begrenzen. Insbesondere bevorzugt kann die Fundamentoberfläche im Wesentlichen auf einem Umgebungsniveau liegen und vorzugsweise eben und/oder zumindest nicht gekrümmt ausgebildet sein. Vorzugsweise kann das Fundament zumindest einen erhöhten Abschnitt dessen Oberseite insbesondere oberhalb oder unterhalb des Umgebungsniveaus liegt, und/oder zumindest einen niedrigeren Abschnitt, dessen Oberseite insbesondere oberhalb oder unterhalb des Umgebungsniveaus liegt, aufweisen.

Sofern auf die Anordnung und/oder die Erstreckungsrichtungen des Halbfertigteils und/oder der Halbfertigteil-Fundamentsegmente, insbesondere auch der Höhe und/oder der Breite und/oder der Dicke der Außenbegrenzungselemente Bezug genommen wird, beziehen sich die Angaben auf den Einbauzustand des Halbfertigteils und/oder der Halbfertigteil-Fundamentsegmente. Vorzugsweise beziehen sich Angaben wie beispielsweise radial, in Umfangsrichtung etc. vorzugsweise auf ein Halbfertigteil, insbesondere auf eine im Wesentlichen vertikale Längsachse, die vorzugsweise eine Mittelachse und/oder Rotationsachse des Halbfertigteils sein kann, und auf jegliche Querschnittsformen eines solchen Halbfertigteils, insbesondere sowohl auf kreisförmige Querschnitte als auch auf polygonale Querschnitte. Ferner vorzugsweise beziehen sich Angaben wie horizontal, vertikal, unten, oben etc. auf den Einbauzustand des Halbfertigteils bzw. der Halbfertigteilfundament-Segmente bzw. des Fundaments. So bilden in der Regel eine Fundamentgrundfläche ein unteres Ende und/oder eine Fundamentoberfläche ein oberes Ende eines Fundaments bzw. eines Halbfertigteils im Einbauzustand.

Unter einer Fundamentgrundfläche kann eine Bodenfläche verstanden werden, die zur Aufnahme des Halbfertigteils und damit auch des Fundaments ausgebildet ist. Hierzu wird die Bodenfläche vorzugsweise bearbeitet. Beispielsweise kann ein Boden ausgehoben und/oder eine Nivellierung und/oder eine Verdichtung durchgeführt werden. Insbesondere bevorzugt kann sich die Fundamentgrundfläche im Wesentlichen unterhalb des Umgebungsniveaus befinden.

Die Erfindung ist nicht auf den Einsatz bei Turmbauwerken, insbesondere Windenergieanlagentürmen, beschränkt, auch wenn sie hier besonders vorteilhaft und auf wirtschaftliche Art und Weise eingesetzt werden kann. Vielmehr kann ein erfindungsgemäßes Halbfertigteil für ein Fundament auch bei Bauwerken anderer Art, insbesondere pfahlartige Bauwerke, eingesetzt werden.

Vorzugsweise ist die Bewehrung als eine Art Gitterstruktur ausgebildet und kann insbesondere bevorzugt mit den Streben verbundene Vertikalstreben umfassen, wobei vorzugsweise die Vertikalstreben an den Streben abgestützt sind. Im Einbauzustand können die Vertikalstreben eine im Wesentlichen vertikale Erstreckung aufweisen. Vorzugsweise können sich die Vertikalstreben im Wesentlichen orthogonal zu den Streben erstrecken. Vorzugsweise können die Vertikalstreben gerade oder bogenförmig gekrümmt sein. Alternativ können die Vertikalstreben gerade und/oder bogenförmige Abschnitte aufweisen. Ferner können die Vertikalstreben im Wesentlichen parallel und/oder koaxial zu dem Außenbegrenzungselement eines Halbfertigteil-Fundamentsegments ausgebildet sein.

Alternativ oder ergänzend kann die Bewehrung mit den Streben verbundene Tangentialstreben umfassen. Die Tangentialstreben können sich im Wesentlichen in Umfangsrichtung erstrecken. Im Einbauzustand können die Tangentialstreben vorzugsweise als im Wesentlichen radiale Horizontalstreben ausgebildet sein. Vorzugsweise können die Tangentialstreben gerade oder bogenförmig gekrümmt sein. Alternativ können die Tangentialstreben gerade und/oder bogenförmige Abschnitte aufweisen. Ferner können die Tangentialstreben im Wesentlichen parallel und/oder koaxial zu dem Außenbegrenzungselement ausgebildet sein.

Vorzugsweise kann die Bewehrung mit den Streben verbundene Vertikalstreben und mit den Streben verbundene Tangentialstreben umfassen. Insbesondere können die Tangentialstreben und die Vertikalstreben mit den Streben vorzugsweise in einer Stelle verbunden sein, beispielsweise mittels eines Drahtes, einer Klemme oder durch Verschweißen. Die Tangentialstreben können vorzugsweise orthogonal zu den Vertikalstreben ausgebildet sein. Durch die Ausgestaltung der Bewehrung als Gitterstruktur kann der Kraftfluss von auf das Fundament wirkenden Kräften optimiert werden.

Alternativ können vorzugsweise die Tangentialstreben mit den Vertikalstreben verbunden sein, wobei vorzugsweise die Streben mit den Tangentialstreben oder den Vertikalstreben verbunden sein können.

Darüberhinaus können die Streben und/oder die Vertikalstreben und/oder die Tangentialstreben im Wesentlichen stabförmig ausgebildet sein. Unter stabförmig kann vorzugsweise verstanden werden, dass die Streben und/oder die Vertikalstreben und/oder die Tangentialstreben länglich, vorzugsweise zylindrisch, mehreckig, etc., ausgestaltet sein können. Demnach können die Streben und/oder die Vertikalstreben und/oder die Tangentialstreben vorzugsweise eine Erstreckung in Längsrichtung aufweisen, die größer ist als eine Erstreckung in Richtung einer Höhe und/oder einer Breite.

Vorzugsweise können die Streben der Bewehrung äquidistant oder lastabhängig entlang der Breite des Außenbegrenzungselements verteilt sein. Vorzugsweise können die Streben bei einer lastabhängigen Verteilung unterschiedliche Abstände, insbesondere engere Abstände und/oder weitere Abstände, zueinander aufweisen. Im Einbauzustand können vorzugsweise die Streben der Halbfertigteil-Fundamentsegmente äquidistant oder lastabhängig entlang eines Innenumfanges des Außenrands verteilt sein. Durch diese Ausgestaltung kann ein Kraftfluss über einen gesamten Bereich des Halbfertigteils und damit auch des Fundaments gewährleistet werden.

In einer besonders bevorzugten Ausführungsvariante des Halbfertigteils ist vorgesehen, dass die Halbfertigteil-Fundamentsegmente auf einer Fundamentgrundfläche anordenbar sind, sodass der Außenrand und die Fundamentgrundfläche den Innenraum begrenzen. Der Innenraum kann hierbei seitlich durch die Außenbegrenzungselemente der Halbfertigteil-Fundamentsegmente begrenzt sein. Die Halbfertigteil-Fundamentsegmente sind vorzugsweise nach oben in Richtung der Fundamentoberfläche und/oder nach unten in Richtung der Fundamentgrundfläche offen ausgestaltet. Im Einbauzustand kann der Innenraum des Halbfertigteils zusätzlich durch die Fundamentgrundfläche begrenzt werden. Vorzugsweise kann der Innenraum nach oben offen ausgestaltet sein. Durch diese Ausgestaltung kann ein Verguss von Beton oder einem anderen Verbundmaterial zur Herstellung des Fundaments von oben in den Innenraum des Halbfertigteils auf die Fundamentgrundfläche in Schwerkraftrichtung erfolgen.

Die Halbfertigteil-Fundamentsegmente sind ganz frei von einem im Einbauzustand unteren Sohlenelement. Demgemäß sind die Halbfertigteil-Fundamentsegmente nach unten in Richtung einer Fundamentgrundfläche offen ausgestaltet. Durch diese Ausgestaltung kann Beton oder ein anderes Verbundmaterial zur Herstellung des Fundaments in den Innenraum des Halbfertigteils auf die Fundamentgrundfläche vergossen werden. Dadurch kann ein Fundament besonders einfach an die Gegebenheiten und/oder die Oberfläche der Fundamentgrundfläche angepasst werden.

Ferner bevorzugt können die Halbfertigteil-Fundamentsegmente ganz oder teilweise frei von einem im Einbauzustand oberen Deckelelement sein. Demnach sind die Halbfertigteil-Fundamentsegmente nach oben in Richtung der Fundamentoberfläche offen ausgestaltet. Durch diese Ausgestaltung ist der Innenraum des Halbfertigteils leicht zugänglich und ein Verguss von Beton oder einem anderen Verbundmaterial kann von oben in den Innenraum in Schwerkraftrichtung erfolgen. Darüberhinaus kann der Verguss vorzugsweise über die gesamte Oberfläche glatt gezogen werden.

Gemäß einer weiter bevorzugten Ausführungsvariante ist vorgesehen dass der Außenrand im Wesentlichen ringförmig ausgebildet ist. Insbesondere bevorzugt kann die Form des Außenrands an eine Form einer Wandung eines auf dem entstehenden Fundament zu errichtenden Turmbauwerks angepasst sein.

Ferner ist es bevorzugt, dass alle oder Gruppen der Halbfertigteil-Fundamentsegmente im Wesentlichen baugleich sind. Vorzugsweise können die Halbfertigteil-Fundamentsegmente identische Höhen und/oder einen identischen Höhenverlauf von dem Außenbegrenzungselement über die Länge der Streben aufweisen. Weiter vorzugsweise können die Halbfertigteil-Fundamentsegmente Außenbegrenzungselemente mit identischen Höhen und/oder identischen Breiten und/oder identischen Dicken aufweisen. Ferner können die Halbfertigteil-Fundamentsegmente eine identische Anzahl Streben umfassen, die vorzugsweise jeweils eine identische Länge aufweisen. Diese Streben können sich vorzugsweise in einem jeweils identischen Winkel aus dem Außenbegrenzungselement erstrecken. Darüberhinaus können sich die Streben in identischer Weise aus dem Außenbegrenzungselement erstrecken. Vorzugsweise sind die einzelnen Streben jeweils mit gleichen Abstand oder lastabhängig voneinander beabstandet. Insbesondere bevorzugt können die Halbfertigteil-Fundamentsegmente einerseits im Wesentlichen baugleich ausgestaltet sein und andererseits einzeln an zu erwartende Umstände, wie beispielsweise zu erwartende Kräfte, angepasst sein. Die baugleiche Ausgestaltung ist insbesondere dahingehend vorteilhaft, dass die Halbfertigteil-Fundamentsegmente besonders einfach anzuordnen sind. Dadurch kann ein Halbfertigteil umfassend einzelne Halbfertigteilfundament-Segmente einfach und schnell hergestellt und damit einhergehend die Baustellenaktivitäten reduziert werden.

Darüberhinaus ist es bevorzugt, dass die Halbfertigteil-Fundamentsegmente im Wesentlichen als Ringsegmente ausgebildet sind. Insbesondere bevorzugt können die Ringsegmente vorzugsweise Kreissegmente mit einer gekappten Spitze sein. Die Ringsegmente können in einem Querschnitt eine Erstreckung in radialer Richtung aufweisen, die ausgebildet ist, um auf ein noch zu errichtendes Bauwerk wirkende Kräfte abzuleiten. Daher ist es insbesondere vorteilhaft, wenn diese Erstreckung in radialer Richtung gleich oder größer ist als eine Erstreckung in radialer Richtung einer Wandung des noch zu errichtenden Bauwerks.

Ferner ist es bevorzugt, dass die Halbfertigteil-Fundamentsegmente als Kreissegmente ausgebildet sind. Durch diese Ausgestaltung können die einzelnen Halbfertigteil-Fundamentsegmente einfach angeordnet und zu einem Halbfertigteil zusammengesetzt werden. Hierdurch kann ein einfaches und schnelles Herstellen der Halbfertigteils gewährleistet werden.

Gemäß einer bevorzugten Ausführungsform sind die Halbfertigteil-Fundamentsegmente im Wesentlichen als Ringsegmente und/oder Kreissegmente ausgebildet.

Vorzugsweise sind die Halbfertigteil-Fundamentsegmente im Wesentlichen baugleich und/oder im Wesentlichen als Ringsegmente und/oder Kreissegmente ausgebildet.

Besonders bevorzugt können die Halbfertigteil-Fundamentsegmente eine mit den Streben verbundene, im Wesentlichen koaxial zu dem Außenbegrenzungselement angeordnete Stützeinheit umfassen. Diese Stützeinheit kann vorzugsweise im Einbauzustand im Wesentlichen vertikal ausgebildet sein. Vorzugsweise können zwei oder mehrere Stützeinheiten vorgesehen sein, die vorzugsweise über eine Länge der Streben verteilt sein können. Hierbei ist es besonders bevorzugt, wenn die Stützelemente gleichmäßig oder lastabhängig voneinander beabstandet über die Länge der Streben verteilt sind. Die Stützelemente können vorzugsweise Vertikalstreben oder Betonelemente sein, die an den Streben abgestützt sind. Darüberhinaus kann das Stützelement insbesondere bevorzugt an einem dem Außenbegrenzungselement gegenüberliegenden Ende der Streben angeordnet sein, um die Streben in vertikaler Richtung abzustützen. Durch derartige Stützelemente kann eine Stabilität der Halbfertigteil-Fundamentsegmente über die Länge der Streben gewährleistet und/oder ein Kraftfluss optimiert werden. Darüberhinaus kann eine Stabilität der Streben auch vor dem Verguss, insbesondere für einen Transport der Halbfertigteil-Fundamentsegmente, gewährleistet werden.

Gemäß einer weiter bevorzugten Ausführungsvariante ist vorgesehen, dass durch ein mit der Bewehrung verbundenes Innenbegrenzungselement vorgesehen ist, wobei die Innenbegrenzungselemente der Halbfertigteil-Fundamentsegmente einen Innenrand bilden. Der Innenrand kann vorzugsweise im Wesentlichen koaxial, insbesondere parallel, zu dem Außenbegrenzungselement ausgebildet sein. Das Innenbegrenzungselement kann vorzugsweise ein Stützelement an dem dem Außenbegrenzungselement gegenüberliegenden Ende der Streben darstellen. Der Innenrand kann vorzugsweise im Einbauzustand im Wesentlichen vertikal ausgerichtet sein. Darüberhinaus kann der Innenrand vorzugsweise in sich geschlossen sein. Alternativ hierzu kann der Innenrand zusätzlich zu den Innenbegrenzungselementen der Halbfertigteil-Fundamentsegmente mindestens ein zusätzliches Einbauelement und/oder Wandelement umfassen. Hierbei können vorzugsweise die Innenbegrenzungselemente und das mindestens eine Einbauelement und/oder eine Wandelement vorzugsweise einen in sich geschlossenen Innenrand bilden.

Vorzugsweise erstrecken sich die Streben von dem Außenbegrenzungselement zu dem Innenbegrenzungselement. Insbesondere bevorzugt erstrecken sich die Streben in das Außenbegrenzungselement und/oder in das Innenbegrenzungselement. Hierbei können die Streben vorzugsweise radial ausgerichtet sein und vorzugsweise ausgehend von dem Außenbegrenzungselement vorzugsweise in Richtung des Innenbegrenzungselements aufeinander zulaufen.

Vorzugsweise kann eine Höhe des Innenrands im Wesentlichen einer Höhe des Außenrands entsprechen. Alternativ kann die Höhe des Innenrands kleiner oder größer als eine Höhe des Außenrands sein. Insbesondere bevorzugt können die Höhe des Fundaments und damit die Fundamentoberfläche durch die Höhe des Innenrands und/oder die Höhe des Außenrands definiert sein.

Besonders bevorzugt kann durch die Ergänzung des Innenraums, der vorzugsweise als ein Raum zwischen dem Innenrand und dem Außenrand ausgebildet ist, mit Verguss und Aushärten des Vergusses vorzugsweise ein monolithisches Gebilde mit hoher Festigkeit entstehen. Ferner kann vorzugsweise durch Ergänzen eines ersten Teilinnenraums, der vorzugsweise als ein Raum zwischen dem Innenrand und dem Außenrand ausgebildet ist, und eines zweiten Teilinnenraums, der vorzugsweise als ein Raum innerhalb des Innenbegrenzungselements ausgebildet ist, mit Verguss und Aushärten des Vergusses vorzugsweise ein monolithisches Gebilde mit hoher Festigkeit entstehen. Ferner kann vorzugsweise eine zusätzliche Bewehrung innerhalb des zweiten Teilinnenraums angeordnet werden. Insbesondere kann der Innenrand nach dem Aushärten nicht gelöst und/oder entfernt werden. Vorzugsweise kann der Innenrand eine verlorene Schalung bilden.

Das Innenbegrenzungselement kann vorzugsweise als Beton vergossenes Schalungselement dienen. Alternativ kann das Innenbegrenzungselement ein Verbundmaterial umfassen. Insbesondere bevorzugt kann das Innenbegrenzungselement dasselbe Material wie ein Verguss des Fundaments oder ein mit dem Material des Vergusses des Fundaments kompatibles Material umfassen. Ferner kann das Innenbegrenzungselement und/oder das Außenbegrenzungselement vorzugsweise bewehrt sein.

Vorzugsweise kann das Innenbegrenzungselement flächig ausgestaltet sein. Hierbei kann das Innenbegrenzungselement eine Erstreckung in einer Ebene in Richtung einer Höhe des Innenbegrenzungselements aufweisen, die um ein Vielfaches größer ist als eine Erstreckung in Richtung einer Dicke des Innenbegrenzungselements. Die Erstreckung in Richtung der Dicke des Innenbegrenzungselements kann vorzugsweise im Wesentlichen orthogonal zu der Erstreckung in Richtung der Höhe des Innenbegrenzungselements ausgebildet sein. Die Ebene und/oder das Innenbegrenzungselement können vorzugsweise gerade oder gewölbt, insbesondere bevorzugt konvex, oder ringförmig oder schalenförmig ausgebildet sein.

Vorzugsweise kann das Innenbegrenzungselement eine Breite aufweisen, die insbesondere bevorzugt größer als 1/6, 1/5, 1/4, 1/3, 1/2, 2/3, 3/4 oder 5/6 der Breite des Außenbegrenzungselements sein kann. Alternativ kann die Breite des Innenbegrenzungselements einer Breite des Außenbegrenzungselements entsprechen.

Eine weiter bevorzugte Fortbildung des Halbfertigteils zeichnet sich dadurch aus, dass Abschnitte von Bewehrungen benachbarter Halbfertigteilfundament-Segmente überlappen. Unter benachbarten Halbfertigteil-Fundamentsegmenten können die Halbfertigteil-Fundamentsegmente verstanden werden, die im Einbauzustand nebeneinander angeordnet sind, um das Halbfertigteil zu bilden. Durch die Überlappung der Bewehrungen kann ein gleichmäßiger Kraftfluss über das gesamte Halbfertigteil bzw. das gesamte Fundament gewährleistet werden.

Vorzugsweise kann die Bewehrung eines Halbfertigteil-Fundamentsegments eine sich im Wesentlichen in Umfangsrichtung erstreckende Tangentialstrebe mit einem ersten überstehenden Ende und/oder einem zweiten überstehenden Ende umfassen, wobei das erste überstehende Ende und/oder das zweite überstehende Ende der Tangentialstrebe eines der mindestens zwei Halbfertigteil-Fundamentsegmente und die Bewehrung des benachbarten Halbfertigteil-Fundamentsegments überlappen. Vorzugsweise können das erste überstehende Ende und/oder das zweite überstehende Ende mit den ersten Streben und/oder den zweiten Streben der Bewehrung des benachbarten Halbfertigteil-Fundamentsegments überlappen. Insbesondere bevorzugt kann das zweite überstehende Ende eines ersten Halbfertigteil-Fundamentsegments mit einem ersten überstehenden Ende des zweiten Halbfertigteil-Fundamentsegments überlappen analog dazu kann vorzugsweise das zweite überstehende Ende des zweiten Halbfertigteil-Fundamentsegments mit dem ersten überstehenden Ende eines dritten Halbfertigteil-Fundamentsegments überlappen. Durch diese Ausgestaltung kann ein Kraftfluss gleichmäßig auf vorzugsweise das gesamte Fundament bzw. die Bewehrung verteilt werden.

Eine weitere bevorzugte Fortbildung des Halbfertigteils zeichnet sich dadurch aus, dass die Bewehrung von mindestens einem Halbfertigteil-Fundamentsegment zusätzlich eingebrachte Bewehrungselemente umfasst. Insbesondere bevorzugt können die Bewehrungselemente in Umfangsrichtung eingebracht werden. Unter Bewehrungselemente können vorzugsweise zusätzliche Bewehrungsstreben und/oder Bewehrungskörbe und/oder dergleichen verstanden werden. Hierbei kann die Bewehrung vorzugweise ausgebildet sein, um zusätzliche Bewehrungselemente darin verankern und/oder anordnen zu können. Dadurch können die Bewehrungen an spezielle und/oder örtliche Belastungen und/oder zu erwartende, örtlich auftretende Kräfte angepasst werden.

Schließlich ist es bevorzugt, dass mindestens ein Halbfertigteil-Fundamentsegment mindestens ein Funktionselement umfasst. Vorzugsweise kann das mindestens eine Halbfertigteil-Fundamentsegment vorzugsweise zwei oder mehrere Funktionselemente, vorzugsweise bedarfsabhängig, umfassen. Ein Funktionselement kann vorzugsweise ein Hüllrohr und oder eine Leitung, wie zum Beispiel eine Rohrleitung und/oder ein Kabel und/oder der gleichen, ein Anschlusselement, wie zum Beispiel ein Ankerelement und/oder der gleichen sein. Derartige Funktionselemente können vorzugsweise nach dem Verguss des Fundaments in dem Fundament eingebettet sein und vorzugsweise zugänglich sein. Insbesondere kann vorzugsweise die Bewehrung von mindestens einem Halbfertigteil-Fundamentsegment das mindestens eine Funktionselement umfassen.

Vorzugsweise kann in mindestens einem Halbfertigteil-Fundamentsegment ein Anbindungsabschnitt integriert sein. Derartige Anbindungsabschnitte dienen dazu, um Bauwerke, insbesondere Turmbauwerke, aufzunehmen.

Insbesondere bevorzugt können die Streben der Bewehrung ersten Streben und von den ersten Streben in vertikaler Richtung beabstandete zweite Streben umfassen, die sich vorzugsweise jeweils im Wesentlichen horizontal von dem Außenbegrenzungselement in Richtung einer Vertikalachse erstrecken. Hierbei können vorzugsweise die ersten Streben in einer ersten Horizontalebene und/oder die zweiten Streben in einer zweiten Horizontalebene angeordnet sein.

Die Horizontalebene kann vorzugsweise horizontal oder auch leicht geneigt zur Horizontalen ausgebildet sein.

Weiter vorzugsweise können sich die Vertikalstreben zwischen den ersten Streben und den zweiten Streben erstrecken und vorzugsweise die ersten Streben und die zweiten Streben verbinden. Ferner können die Vertikalstreben vorzugsweise an den ersten Streben und/oder den zweiten Streben abgestützt sein. Im Einbauzustand können sich die Vertikalstreben im Wesentlichen in vertikaler Richtung zwischen den ersten Streben und den zweiten Streben erstrecken. Vorzugsweise können die Vertikalstreben orthogonal zu den ersten und/oder zweiten Streben angeordnet sein. Ferner können die Vertikalstreben im Wesentlichen parallel zu dem Außenbegrenzungselement und/oder gegebenenfalls dem Innenbegrenzungselement angeordnet werden. Insbesondere bevorzugt können zwei oder mehrere Vertikalstreben in einer zu dem Außenbegrenzungselement parallelen Vertikalebene angeordnet werden.

Die Vertikalebene kann vorzugsweise vertikal oder auch leicht geneigt zur Vertikalen ausgebildet sein.

Ferner können die Streben vorzugsweise voneinander beabstandet angeordnet werden, insbesondere bevorzugt können die ersten Streben voneinander beabstandet und/oder die zweiten Streben voneinander beabstandet angeordnet werden.

Vorzugsweise können die ersten Streben sich in Richtung der Längsachse erstrecken und radial ausgerichtet sein und/oder die zweiten Streben sich in Richtung der Längsachse erstrecken und radial ausgerichtet sein.

Bevorzugt können die ersten Streben und/oder die zweiten Streben entlang einer Breite des Außenbegrenzungselements vorzugsweise äquidistant oder lastabhängig entlang der Breite des Außenbegrenzungselements, insbesondere bevorzugt äquidistant oder lastabhängig in Umfangsrichtung des Halbfertigteils, verteilt sein.

Insbesondere bevorzugt kann der Außenrand im Wesentlichen ringförmig ausgebildet sein, wobei sich die ersten Streben und/oder die zweiten Streben im Wesentlichen in radialer Richtung erstrecken.

Besonders bevorzugt können die ersten Streben in einer ersten Horizontalebene und die zweiten Streben in einer zweiten Horizontalebene angeordnet sein, wobei die erste Horizontalebene von der zweiten Horizontalebene vertikal beabstandet ist und vorzugsweise sich die erste Horizontalebene im Wesentlichen horizontal und/oder parallel zu der zweiten Horizontalebene erstreckt.

Vorzugsweise kann eine Vielzahl von Streben in einer Vielzahl von Horizontalebenen angeordnet sein, wobei sich die Vielzahl von Horizontalebenen parallel zu der ersten Horizontalebene und/oder parallel zu der zweiten Horizontalebene erstrecken.

Ferner ist es bevorzugt, dass die Vertikalstreben voneinander beabstandet angeordnet sind. Darüberhinaus können sich die Vertikalstreben vorzugsweise parallel zueinander, insbesondere bevorzugt parallel zu dem Außenbegrenzungselement, erstrecken.

Insbesondere bevorzugt können die Vertikalstreben in einer ersten Vertikalebene und einer zweiten Vertikalebene angeordnet sein, wobei vorzugsweise sich die zweite Vertikalebene parallel zu der ersten Vertikalebene erstreckt. Vorzugsweise erstrecken sich die erste Vertikalebene und/oder die zweite Vertikalebene im Wesentlichen parallel zu dem Außenbegrenzungselement und/oder gegebenenfalls zu dem Innenbegrenzungselement. Die Vertikalstreben können vorzugsweise in einer Vielzahl von Vertikalebenen angeordnet sein, wobei sich die Vielzahl von Vertikalebenen vorzugsweise parallel zu dem Außenbegrenzungselement und/oder gegebenenfalls dem Innenbegrenzungselement erstrecken.

Vorzugsweise können die Tangentialstreben mit den ersten Streben und/oder den zweiten Streben verbunden sein. Hierbei können die Tangentialstreben an den ersten Streben, vorzugsweise im Bereich eines ersten Endes der Vertikalstreben, die an den ersten Streben abgestützt sind, und/oder an den zweiten Streben im Bereich der zweiten Enden der Vertikalstreben, die an den zweiten Streben abgestützt sind, angeordnet sein. Die Tangentialstreben können vorzugsweise in der ersten Horizontalebene und/oder der zweiten Horizontalebene und/oder weiteren Horizontalebenen angeordnet sein.

Gemäß einem weiteren Aspekt wird die eingangs genannte Aufgabe gelöst durch ein Halbfertigteil-Fundamentsegment für ein Halbfertigteil gemäß Anspruch 9.

Das Halbfertigteil-Fundamentsegment zeichnet sich dadurch aus, dass das Halbfertigteil-Fundamentsegment ganz frei von einem im Einbauzustand unteren Sohlenelement ist.

Ferner ist es bevorzugt, dass das Halbfertigteil-Fundamentsegment eine mit den Streben verbundene, im Wesentlichen koaxial zu dem Außenbegrenzungselement angeordnete Stützeinheit umfasst.

Darüberhinaus wird die eingangs genannte Aufgabe gelöst durch den Aspekt eines Fundaments mit einem auf einer Fundamentgrundfläche angeordneten Halbfertigteil, wobei ein Innenraum des Halbfertigteils mit aushärtbaren Verguss befüllt ist. Durch das Befüllen mit aushärtbaren Verguss kann vorzugsweise ein Gesamtquerschnitt des Fundaments mit aushärtbaren Verguss ergänzt werden

Vorzugsweise kann das Fundament einen Turmanbindungsabschnitt aufweisen, der ausgebildet ist, um einen Turm, vorzugsweise einen Windenergieanlagenturm, und/oder eine Windenergieanlage aufzunehmen. Darüberhinaus kann an dem Fundament ein Turm, insbesondere ein Windenergieanlagenturm und vorzugsweise eine Windenergieanlage, aufgenommen sein.

Gemäß einem weiteren Aspekt wird die eingangs genannte Aufgabe gelöst durch die Verwendung eines Halbfertigteil-Fundamentsegments zum Herstellen eines Halbfertigteils für ein Fundament eines Turmbauwerks und/oder zum Herstellen eines Fundaments.

Für weitere Vorteile, Ausführungsvarianten und Ausführungsdetails dieser weiteren Aspekte und ihrer möglichen Fortbildungen wird auch auf die zuvor erfolgte Beschreibung zu den entsprechenden Merkmalen und Fortbildungen des Halbfertigteils verwiesen.

Insbesondere bevorzugt kann ein Halbfertigteil-Fundamentsegment für ein Halbfertigteil eines Fundaments mit einem Verfahren umfassend die folgenden Schritte hergestellt werden: Durchführung von Bewehrungsarbeiten zur Herstellung einer Bewehrung, Bereitstellen und/oder Herstellen eines ersten Randelements, Verbinden der Bewehrung mit dem ersten Randelement, wobei Streben der Bewehrung mindestens einseitig aus dem ersten Randelement hervorstehen, Bereitstellen und/oder Herstellen eines zweiten Randelements, Anordnen des ersten Randelements und des zweiten Randelements, vorzugsweise im Wesentlichen parallel zueinander, unter Einhaltung eines Rand-Zwischenraums, wobei sich vorzugsweise ein erstes Ende der Streben vorzugsweise zwischen dem ersten Randelement und dem zweiten Randelement befinden, Befüllen des Rand-Zwischenraums mit aushärtbaren Verguss und Aushärten des Vergusses.

Gemäß einem weiteren Aspekt wird die eingangs genannte Aufgabe gelöst durch ein Verfahren zum Herstellen eines Halbfertigteils, umfassend die Schritte: Vorbereiten einer Fundamentgrundfläche, Herstellen und/oder Bereitstellen von mindestens zwei Halbfertigteil-Fundamentsegmenten und Anordnen der Halbfertigteilfundament-Segmente auf der Fundamentgrundfläche. Vorzugsweise kann der Schritt des Vorbereitens einer Fundamentgrundfläche einen Erdaushub umfassen, wobei vorzugsweise das Fundament mindestens teilweise unterhalb eines Bodenniveaus eingelassen werden kann. Darüberhinaus kann vorzugsweise dieser Schritt eine Nivellierung und/oder eine Verdichtung der Fundamentgrundfläche umfassen. Die Fundamentgrundfläche kann vorzugsweise unterhalb eines Umgebungsniveaus ausgebildet werden.

Darüberhinaus wird die eingangs genannte Aufgabe gelöst durch den Aspekt eines Verfahrens zum Herstellen eines Fundaments mit den Schritten: Herstellen eines Halbfertigteils, Befüllen eines Innenraums des Halbfertigteils mit aushärtbaren Verguss und Aushärten des Vergusses. Vorzugsweise kann der aushärtbare Verguss von einer Oberseite des Halbfertigteils in Schwerkraftrichtung in den Innenraum des Halbfertigteils auf die Fundamentgrundfläche gegeben werden.

Die erfindungsgemäßen Verfahren und ihre möglichen Fortbildungen weisen Merkmale bzw. Verfahrensschritte auf, die sie insbesondere dafür geeignet machen, für ein erfindungsgemäßes Halbfertigteil und seine Fortbildungen sowie für ein Halbfertigteil-Fundamentsegment und ein Fundament verwendet zu werden. Für weitere Vorteile, Ausführungsvarianten und Ausführungsdetails dieser weiteren Aspekte und ihrer möglichen Fortbildungen wird auch auf die Beschreibung zu den entsprechenden Merkmalen und Fortbildungen der anderen Aspekte verwiesen.

Bevorzugte Ausführungsbeispiele werden exemplarisch anhand der beiliegenden Figuren erläutert. Es zeigen:
- Fig. 1: eine dreidimensionale Ansicht einer Windenergieanlage mit einem Turm und einer Gondel;
- Fig. 2: eine perspektivische Ansicht eines Ausführungsbeispiels eines Halbfertigteils;
- Fig. 3: eine perspektivische Ansicht eines Ausführungsbeispiels eines Halbfertigteil-Fundamentsegments für ein Halbfertigteil;
- Fig. 4a: eine Draufsicht auf einen Ausschnitt eines Halbfertigteil-Fundamentsegments gemäß Fig. 3;
- Fig. 4b: eine Draufsicht auf einen Ausschnitt eines Halbfertigteil-Fundamentsegments gemäß Fig. 3;
- Fig. 5a: eine Draufsicht auf einen Ausschnitt eines Halbfertigteils gemäß Fig. 2; und
- Fig. 5b: eine Draufsicht auf einen Ausschnitt eines Halbfertigteils gemäß Fig. 2.

In den Figuren sind gleiche oder im Wesentlichen funktionsgleiche bzw. -ähnliche Elemente mit den gleichen Bezugszeichen bezeichnet.

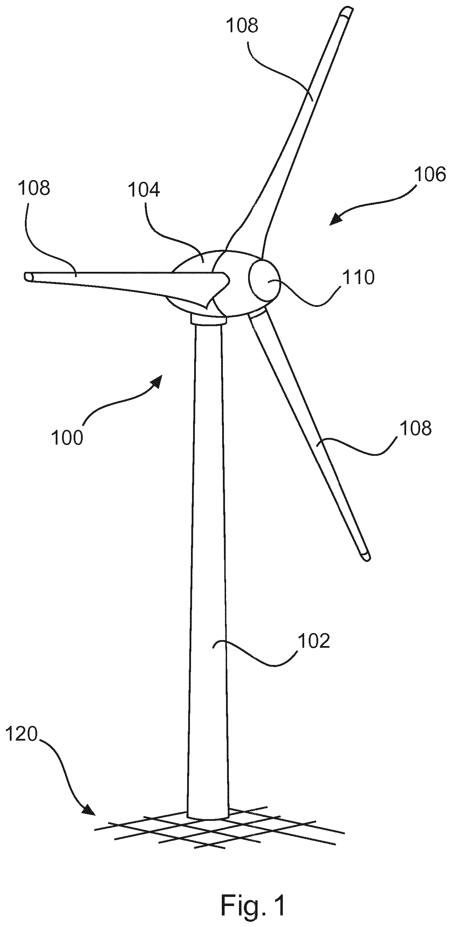

Fig. 1 zeigt eine schematische, dreidimensionale Ansicht einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden. Der Turm 102 der Windenergieanlage 100 ist auf einem Fundament 120 umfassend ein Halbfertigteil wie hierin beschrieben angeordnet.

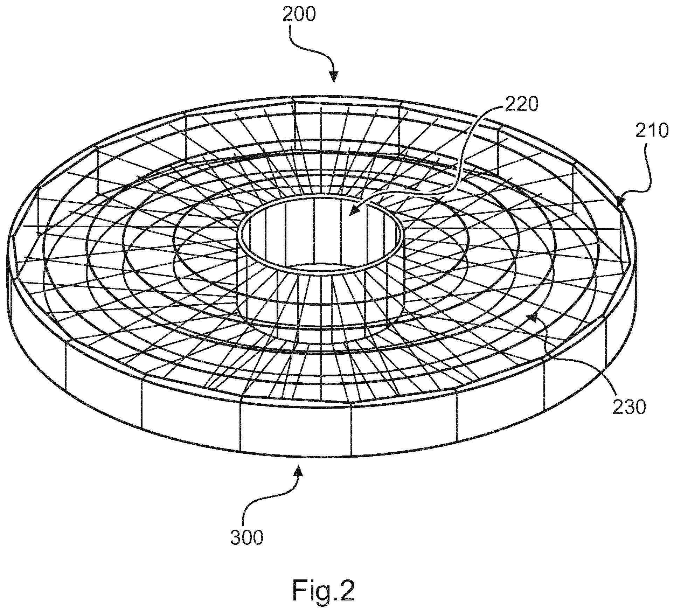

Fig. 2 zeigt ein Halbfertigteil 200 für ein Fundament in einem Einbauzustand, das eine Vielzahl im Wesentlichen baugleicher Halbfertigteil-Fundamentsegmente 300 umfasst. Die Halbfertigteil-Fundamentsegmente 300 sind gemäß des in Fig. 2 gezeigten Beispiels als Ringsegmente ausgebildet und weisen jeweils ein Außenbegrenzungselement 210 und ein zu dem Außenbegrenzungselement 210 parallel ausgerichtetes Innenbegrenzungselement 220 auf. Ferner umfassen die Halbfertigteil-Fundamentsegmente 300 eine Bewehrung 230, die als eine Gitterkonstruktion ausgebildet ist und vorzugsweise miteinander verbundene Streben umfasst.

Die Außenbegrenzungselemente 210 sind in dem hier gezeigten Beispiel bikonvex ausgebildet und bilden einen sich in vertikaler Richtung erstreckenden Außenrand des Halbfertigteils 200. Ferner sind die Innenbegrenzungselemente 210 gerade ausgebildet und bilden einen Innenrand des Halbfertigteils 200. Der Innenrand ist im Wesentlichen koaxial zu dem Außenrand ausgerichtet. Der Außenrand und der Innenrand des Halbfertigteils 200 sind im Wesentlichen polygonal ausgebildet. Die Außenbegrenzungselemente 210 und die Innenbegrenzungselemente 220 sind flächig ausgestaltet. Die Außenbegrenzungselemente 210 und/oder die Innenbegrenzungselemente 220 sowie der Außenrand und/oder der Innenrand können vorzugsweise auch andersartig ausgestaltet sein.

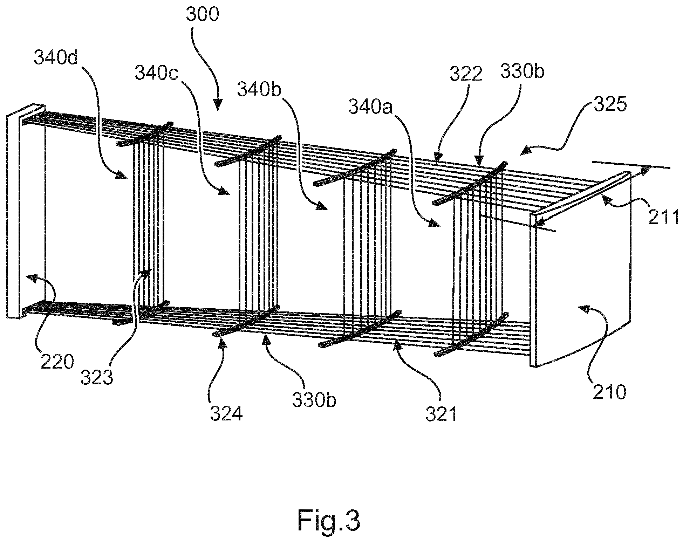

Das Innenbegrenzungselement 220 weist nach dem in Fig. 3 gezeigten Beispiel eine Höhe auf, die größer ist als eine Höhe des Außenbegrenzungselements 210. Das Innenbegrenzungselement 220 kann jedoch auch eine Höhe aufweisen, die vorzugsweise einer Höhe des Außenbegrenzungselements 210 entspricht.

Die Bewehrung 230 umfasst Streben, die sich zwischen dem Außenbegrenzungselement 210 und dem Innenbegrenzungselement 220 radial erstrecken und ausgehend von dem Außenbegrenzungselement 210 in Richtung des Innenbegrenzungselements 220 aufeinander zulaufen. Die Streben der Bewehrung 230 erstrecken sich über einen wesentlichen Bereich des Innenraums, der als ein Raum zwischen dem Innenrand und dem Außenrand definiert ist. Dieser Innenraum ist nachträglich mit aushärtbaren Verguss befüllbar, um das Fundament 120 herzustellen. Vorzugsweise kann der Raum zwischen dem Innenrand und dem Außenrand ein erster Teilinnenraum und vorzugsweise ein Raum innerhalb des Innenraums ein zweiter Teilinnenraum sein. Hierbei kann vorzugsweise der erste Teilinnenraum und der zweite Teilinnenraum nachträglich mit aushärtbaren Verguss befüllt werden, um das Fundament herzustellen.

Anhand Fig. 3 wird eine Ausgestaltung eines Halbfertigteil-Fundamentsegments 300 für ein Halbfertigteil 200 in Form eines Ringsegments gezeigt. Das Halbfertigteil-Fundamentsegment 300 weist hierbei ein Außenbegrenzungselement 210 auf, aus dem sich Streben 321, 322 im Wesentlichen in horizontaler Richtung bis zu einem Innenbegrenzungselement 220 erstrecken. Hierbei ist das Innenbegrenzungselement 220 im Wesentlichen parallel zu dem Außenbegrenzungselement 210 ausgerichtet. Darüberhinaus weist das Außenbegrenzungselement 210 eine Breite 211 auf, die größer ist als eine Breite des Innenbegrenzungselements 220. Durch diese Ausgestaltung sind die Streben 321, 322 in Richtung des Innenbegrenzungselements 220 aufeinander zulaufend. Die Streben 321, 322 umfassen erste Streben 321, die sich in einer ersten Horizontalebene 330a von dem Außenbegrenzungselement 210 zu dem Innenbegrenzungselement 220 erstrecken. Darüberhinaus umfassen in dem hier gezeigten Beispiel die Streben 321, 322 zweite Streben 322, die sich in einer zweiten Horizontalebene 330b von dem Außenbegrenzungselement 210 zu dem Innenbegrenzungselement 220 erstrecken. Die erste Horizontalebene 330a und die zweite Horizontalebene 330b sind im Wesentlichen horizontal ausgebildet, wobei die zweite Horizontalebene 330b in vertikaler Richtung von der ersten Horizontalebene 330a beabstandet ist. Die ersten Streben 321 und die zweiten Streben 322 sind gemäß diesem Ausführungsbeispiel jeweils voneinander beabstandet und sind entlang der Breite 211 des Außenbegrenzungselements 210 und der Breite des Innenbegrenzungselements 220 äquidistant verteilt. Die Streben 321, 322 können vorzugsweise auch lastabhängig verteilt sein. Darüberhinaus können weitere Horizontalebenen mit Streben vorgesehen sein.

Ferner sind nach dem in Fig. 3 gezeigten Beispiel Vertikalstreben 323 vorgesehen, die sich in Wesentlichen in vertikaler Richtung von den ersten Streben 321 zu den zweiten Streben 322 erstrecken. Die Vertikalstreben 323 sind in Vertikalebenen 340a, 340b, 340c, 340d parallel bzw. koaxial zu dem Außenbegrenzungselement 210 und dem Innenbegrenzungselement 220 angeordnet. Die Vertikalebenen 340a, 340b, 340c, 340d können in horizontaler Richtung voneinander beabstandet sein und die gleiche Anzahl an Vertikalstreben 323 umfassen. Nach dem in Fig. 3 gezeigten Beispiel sind die Vertikalebenen 340a, 340b, 340c, 340d gleichmäßig in horizontaler Richtung voneinander beabstandet. Die Vertikalebenen 340a, 340b, 340c, 340d können jedoch auch lastabhängig, insbesondere enger und/oder weiter, voneinander beabstandet sein. Darüberhinaus sind auch die Vertikalstreben 323 in einer Vertikalebene 340a, 340b, 340c, 340d voneinander beabstandet und stabförmig ausgebildet.

Ferner sind gemäß Fig. 3 Tangentialstreben 324, 325 vorgesehen, die sich radial, in horizontaler Richtung erstrecken und jeweils ein erstes überstehendes Ende und ein zweites überstehendes Ende aufweisen. Als ein überstehendes Ende ist der Abschnitt einer Tangentialstrebe 324, 325 zu verstehen, der über jeweils die äußere Strebe 321, 322 hervorsteht. Die Tangentialstreben 324, 325 sind hierbei bogenförmig gekrümmt und koaxial bzw. parallel zu dem Außenbegrenzungselement 210. Gemäß diesem Ausführungsbeispiel sind erste Tangentialstreben 324 in der ersten Horizontalebene 330a und zweite Tangentialstreben 325 in der zweiten Horizontalebene 330b angeordnet.

Die Vertikalstreben 323 sind in einer ersten Vertikalebene 340a, einer zweiten Vertikalebene 340b, einer dritten Vertikalebenen 340c, und einer vierten Vertikalebene 340d angeordnet. Hierbei sind die erste Vertikalebene 340a, die zweite Vertikalebene 340b, die dritte Vertikalebene 340c und die vierte Vertikalebene 340d parallel bzw. koaxial zueinander und parallel bzw. koaxial zu dem Außenbegrenzungselement 210 und dem Innenbegrenzungselement 220 ausgerichtet. Darüberhinaus können weitere Vertikalebenen mit Vertikalstreben vorgesehen sein. Insbesondere kann die Anzahl der Vertikalebenen und damit auch der Vertikalstreben von einer Länge der Streben 321, 322 abhängen und/oder lastabhängig sein.

Gemäß dem in Fig. 3 gezeigten Ausführungsbeispiel sind die ersten Tangentialstreben 324 mit den ersten Streben 321 und ersten Enden der Vertikalstreben 323 verbunden.

Ferner sind die zweiten Tangentialstreben 325 mit den zweiten Streben 322 und den zweiten Enden der Vertikalstreben 323 verbunden.

Das hier gezeigte Halbfertigteil-Fundamentsegment 300 ist ganz frei von einem unteren Sohlenelement und einem oberen Deckelelement. Demnach ist das Halbfertigteil-Fundamentsegment 300 nach oben und nach unten offen ausgestaltet.

Das Halbfertigteil 200 gemäß Fig. 2 kann durch ein Positionieren mehrerer, in Fig. 3 gezeigter Halbfertigteil-Fundamentsegmente 300 vorzugsweise auf eine vorbereitete Fundamentgrundfläche hergestellt werden. Durch ein Befüllen des Innenraums bzw. des ersten Teilinnenraums und des zweiten Teilinnenraums von oben in Schwerkraftrichtung auf die Fundamentgrundfläche mit aushärtbaren Verguss, insbesondere Beton oder einem anderen Verbundmaterial, kann das Fundament 120 hergestellt werden.

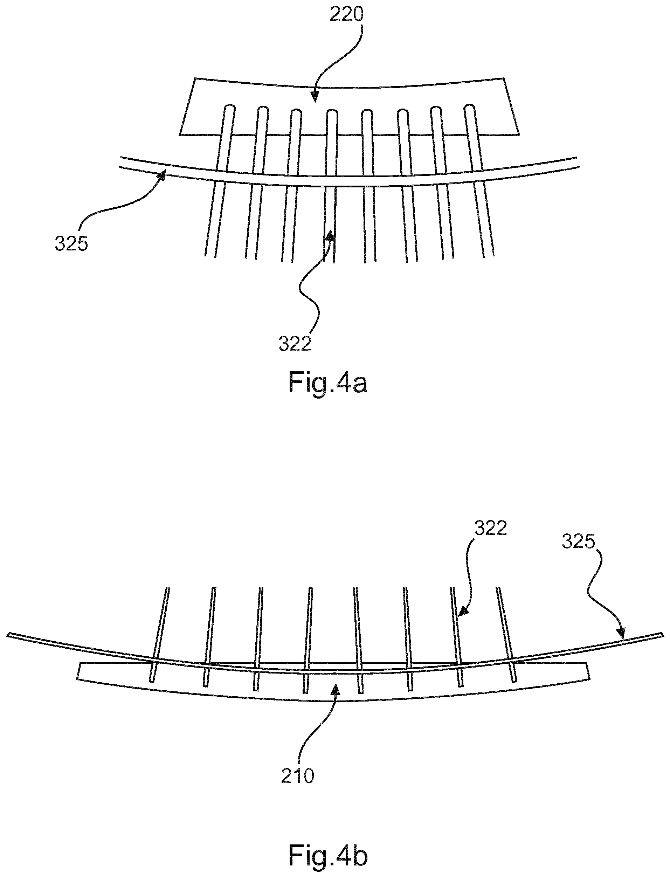

Fig. 4a und Fig. 4b zeigen jeweils einen Ausschnitt eines Halbfertigteil-Fundamentsegments gemäß dem in Fig. 3 gezeigten Beispiel. Fig. 4a zeigt hierbei ein Innenbegrenzungselement 220 aus dem sich Streben 322, die mit einer Tangentialstrebe 325 verbunden sind, erstrecken.

Das Ausführungsbeispiel nach Fig. 4 zeigt ein Außenbegrenzungselement 210, aus dem sich Streben 322 erstrecken. Gemäß dieser Ausführungsform ist eine Tangentialstrebe 325 an dem Außenbegrenzungselement 210 ausgebildet und erstreckt sich zumindest teilweise in das Außenbegrenzungselement 210 b. Die Tangentialstrebe 325 gemäß Fig. 4a und Fig. 4b ist hierbei orthogonal zu den Streben 322 ausgerichtet.

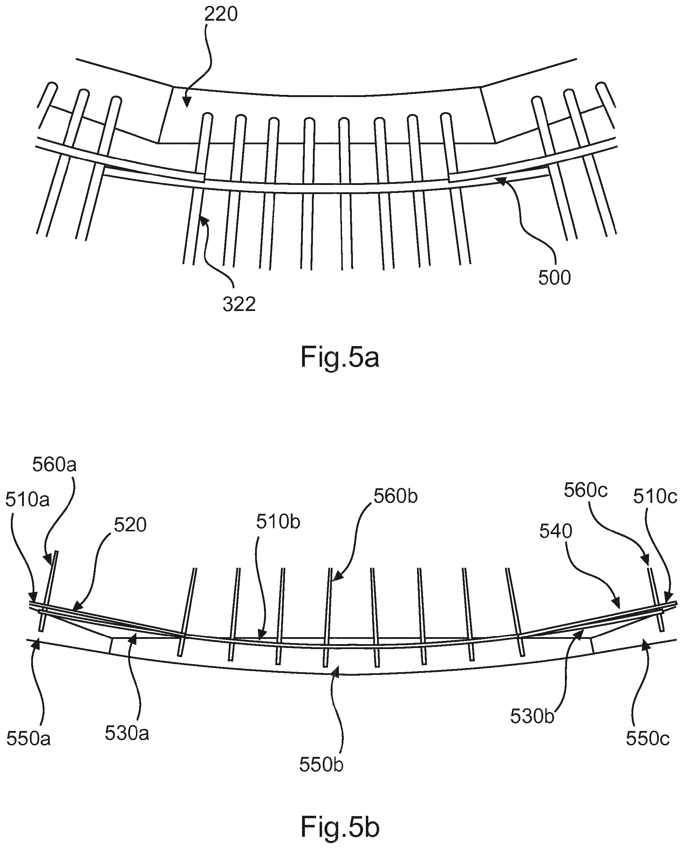

Der Ausschnitt aus Fig. 5a zeigt eine Überlappung 500 der Tangentialstreben, die sich orthogonal zu den Streben 322 erstrecken. Die Streben 322 gemäß Fig. 5a erstrecken sich im Wesentlichen horizontal aus dem jeweiligen Innenbegrenzungselement 220 der Halbfertigteilfundamentsegmente. Fig. 5b zeigt Ausschnitte von drei Halbfertigteil-Fundamentsegmenten 300, die nebeneinander angeordnet sind, sodass die jeweiligen überstehenden Enden der Tangentialstreben 510a, 510b, 510c überlappen. Der hier beispielhaft gezeigte Ausschnitt zeigt ein erstes Außenbegrenzungselement 550a mit Streben 560a sowie einer ersten Tangentialstrebe 510a mit einem zweiten überstehenden Ende 520. Dieses zweite überstehende Ende 520 der ersten Tangentialstrebe 510a überlappt mit einem ersten überstehenden Ende 530a einer zweiten Tangentialstrebe 510b, die sich orthogonal zu Streben 560b eines zweiten Außenbegrenzungselement 550b erstrecken. Die zweite Tangentialstrebe 510b weist ferner ein zweites überstehendes Ende 530b auf, das mit einem ersten überstehenden Ende 540 einer dritten Tangentialstrebe 510c überlappt. Die dritte Tangentialstrebe 510c erstreckt sich hierbei orthogonal zu Streben 560c eines dritten Außenbegrenzungselements 550c.

Die Halbfertigteile und/oder die Halbfertigteil-Fundamentsegmente haben verschiedene Vorteile. Insbesondere können hierdurch einfach und/oder kostengünstig Fundamente hergestellt werden. Ferner kann eine Bauzeit eines Fundaments und/oder eines Bauwerks deutlich verkürzt werden. Insbesondere kann bei derartigen Fundamenten auch ein gleichmäßiger Kraftfluss und/oder ein sicheres Ableiten auftretender Kräfte gewährleistet werden.

### Bezugszeichen

- 100: Windenergieanlage
- 102: Turm
- 104: Gondel
- 106: aerodynamischer Rotor
- 108: Rotorblätter
- 110: Spinner
- 120: Fundament
- 200: Halbfertigteil
- 210: Außenbegrenzungselement
- 211: Breite des Außenbegrenzungselements
- 220: Innenbegrenzungselement
- 230: Bewehrung
- 300: Halbfertigteil-Fundamentsegment
- 321, 322: Streben / Horizontalstreben
- 323: Vertikalstreben
- 324, 325: Tangentialstreben
- 330a: erste Horizontalebene
- 330b: zweite Horizontalebene
- 340a: erste Vertikalebene
- 340b: zweite Vertikalebene
- 340c: dritte Vertikalebene
- 340d: vierte Vertikalebene
- 500: Überlappung
- 510a: erste Tangentialstrebe
- 510b: zweite Tangentialstrebe
- 510c: dritte Tangentialstrebe
- 520: zweites überstehendes Ende der ersten Tangentialstrebe
- 530a: erstes überstehendes Ende der zweiten Tangentialstrebe
- 530b: zweites überstehendes Ende der zweiten Tangentialstrebe
- 540: erstes überstehendes Ende der dritten Tangentialstrebe
- 550a: erstes Außenbegrenzungselement
- 550b: zweites Außenbegrenzungselement
- 550c: drittes Außenbegrenzungselement
- 560a: erste Streben / Horizontalstreben
- 560b: zweite Streben / Horizontalstreben
- 560c: dritte Streben / Horizontalstreben

## Patentansprüche

1. Halbfertigteil-Fundamentsegment (300) für ein Halbfertigteil (200), umfassend
- ein Außenbegrenzungselement (210) und
- eine mit dem Außenbegrenzungselement (210) verbundene Bewehrung (230), die aus dem Außenbegrenzungselement (210) hervorstehende Streben (321, 322) umfasst;
- wobei das Außenbegrenzungselement (210) ausgebildet ist, um im Einbauzustand einen Teil eines Außenrands des Halbfertigteils (200) zu bilden, der einen nachträglich mit aushärtbaren Verguss zu befüllenden Innenraum begrenzt, wobei sich die Bewehrung (230) von dem Außenrand in den Innenraum erstreckt,
- wobei das Halbfertigteil-Fundamentsegment (300) ganz frei von einem im Einbauzustand unteren Sohlenelement ist,
**dadurch gekennzeichnet, dass**
- das Außenbegrenzungselement flächig ausgestaltet ist und eine Erstreckung in einer Flächenebene in Richtung einer Höhe und einer Breite des Außenbegrenzungselements aufweist, die um ein Vielfaches größer ist als eine Erstreckung in Richtung einer Dicke des Außenbegrenzungselements, wobei sich die Höhe des Außenbegrenzungselements im Einbauzustand im Wesentlichen in vertikaler Richtung erstreckt.

2. Halbfertigteil-Fundamentsegment (300) nach dem vorstehenden Anspruch, umfassend eine mit den Streben verbundene, im Wesentlichen koaxial zu dem Außenbegrenzungselement (210) angeordnete Stützeinheit.

3. Halbfertigteil (200) für ein Fundament (120) eines Turmbauwerks, insbesondere eines Windenergieanlagenturms (100, 102), umfassend mindestens zwei Halbfertigteil-Fundamentsegmente (300) mit jeweils
- einem Außenbegrenzungselement (210) und
- einer mit dem Außenbegrenzungselement (210) verbundenen Bewehrung (230), die aus dem Außenbegrenzungselement (210) hervorstehende Streben (321, 322) umfasst,
wobei die Außenbegrenzungselemente (210) der Halbfertigteil-Fundamentsegmente (300) einen Außenrand bilden, der einen nachträglich mit aushärtbaren Verguss zu befüllenden Innenraum begrenzt, und
wobei sich die Bewehrungen (230) der Halbfertigteil-Fundamentsegmente (300) von dem Außenrand in den Innenraum erstrecken,
wobei die Halbfertigteil-Fundamentsegmente (300) ganz frei von im Einbauzustand unteren Sohlenelementen sind,
**dadurch gekennzeichnet, dass**
das Außenbegrenzungselement flächig ausgestaltet ist und eine Erstreckung in einer Flächenebene in Richtung einer Höhe und einer Breite des Außenbegrenzungselements aufweist, die um ein Vielfaches größer ist als eine Erstreckung in Richtung einer Dicke des Außenbegrenzungselements, wobei sich die Höhe des Außenbegrenzungselements im Einbauzustand im Wesentlichen in vertikaler Richtung erstreckt.

4. Halbfertigteil (200) nach dem vorstehenden Anspruch, **dadurch gekennzeichnet, dass** die Halbfertigteil-Fundamentsegmente (300) auf einer Fundamentgrundfläche anordenbar sind, sodass der Außenrand und die Fundamentgrundfläche den Innenraum begrenzen.

5. Halbfertigteil (200) nach mindestens einem der beiden vorstehenden Ansprüche, **dadurch gekennzeichnet, dass** der Außenrand im Wesentlichen ringförmig ausgebildet ist.

6. Halbfertigteil (200) nach dem vorstehenden Anspruch, **dadurch gekennzeichnet, dass** die Halbfertigteil-Fundamentsegmente (300) im Wesentlichen baugleich sind und/oder im Wesentlichen als Ringsegmente und/oder Kreissegmente ausgebildet sind.

7. Halbfertigteil (200) nach mindestens einem der vorstehenden Ansprüche 3-6, **gekennzeichnet durch** ein mit der Bewehrung (230) verbundenes Innenbegrenzungselement (220), wobei die Innenbegrenzungselemente (220) der Halbfertigteil-Fundamentsegmente (300) einen Innenrand bilden.

8. Halbfertigteil (200) nach mindestens einem der vorstehenden Ansprüche 3-7, **dadurch gekennzeichnet, dass** Abschnitte von Bewehrungen (230) benachbarter Halbfertigteil-Fundamentsegmente (300) überlappen.

9. Halbfertigteil (200) nach mindestens einem der vorstehenden Ansprüche 3-8, **dadurch gekennzeichnet, dass** die Bewehrung (230) von mindestens einem Halbfertigteil-Fundamentsegment (300) zusätzlich eingebrachte Bewehrungselemente umfasst.

10. Halbfertigteil (200) nach mindestens einem der vorstehenden Ansprüche 3-9, **dadurch gekennzeichnet, dass** mindestens ein Halbfertigteil-Fundamentsegment (300) mindestens ein Funktionselement umfasst.

11. Fundament mit einem auf einer Fundamentgrundfläche angeordneten Halbfertigteil (200) nach mindestens einem der Ansprüche 3 bis 10, wobei ein Innenraum des Halbfertigteils (200) mit ausgehärteten Verguss befüllt ist.

12. Verwendung eines Halbfertigteil-Fundamentsegments (300) nach mindestens einem der Ansprüche 1 bis 2 zum Herstellen eines Halbfertigteils (200) für ein Fundament (120) eines Turmbauwerks nach mindestens einem der Ansprüche 3 bis 10 und/oder zum Herstellen eines Fundaments (120) nach dem vorstehenden Anspruch.

13. Verfahren zum Herstellen eines Halbfertigteils (200) nach mindestens einem der Ansprüche 3 bis 10, umfassend die Schritte:
- Vorbereiten einer Fundamentgrundfläche,
- Herstellen und/oder Bereitstellen von mindestens zwei Halbfertigteil-Fundamentsegmenten (300) nach mindestens einem der Ansprüche 1 bis 2 und
- Anordnen der Halbfertigteil-Fundamentsegmente (300) auf der Fundamentgrundfläche.

14. Verfahren zum Herstellen eines Fundaments (120) mit den Schritten:
- Herstellen eines Halbfertigteils (200) nach dem vorstehenden Anspruch,
- Befüllen eines Innenraums des Halbfertigteils (200) mit aushärtbaren Verguss und
- Aushärten des Vergusses.

## Claims

1. A semi-finished part foundation segment (300) for a semi-finished part (200), comprising
- an outer limiting element (210) and
- a reinforcement (230) which is connected to the outer limiting element (210) and comprises struts (321, 322) protruding from the outer limiting element (210);
- wherein the outer limiting element (210) is configured so as to form, in the installed state, a part of an outer edge of the semi-finished part (200) which delimits an interior to be later filled with a curable casting compound, wherein the reinforcement (230) extends from the outer edge into the interior,
- wherein the semi-finished part foundation segment (300) is fully free from a lower base element in the installed state,
- **characterized in that**
- the outer limiting element is designed to be planar and has an extent in a surface plane in the direction of a height and width of the outer limiting element, which is many times greater than an extent in the direction of a thickness of the outer limiting element, wherein the height of the outer limiting element extends substantially in a vertical direction in the installed state.

2. The semi-finished part foundation segment (300) as claimed in the preceding claim, comprising a support unit which is connected to the struts and arranged substantially coaxially to the outer limiting element (210).

3. A semi-finished part (200) for a foundation (120) of a tower construction, in particular of a wind turbine tower (100, 102), comprising at least two semi-finished part foundation segments (300) which each have
- an outer limiting element (210) and
- a reinforcement (230) which is connected to the outer limiting element (210) and comprises struts (321, 322) protruding from the outer limiting element (210),
wherein the outer limiting elements (210) of the semi-finished part foundation segments (300) form an outer edge which delimits an interior to be later filled with curable casting compound, and
wherein the reinforcements (230) of the semi-finished part foundation segments (300) extend from the outer edge into the interior
wherein the semi-finished part foundation segments (300) are fully free from lower base elements in the installed state,
**characterized in that**
the outer limiting element is designed to be planar and has an extent in a surface plane in the direction of a height and width of the outer limiting element, which is many times greater than an extent in the direction of a thickness of the outer limiting element, wherein the height of the outer limiting element extends substantially in a vertical direction in the installed state.

4. The semi-finished part (200) as claimed in the preceding claim, **characterized in that** the semi-finished part foundation segments (300) can be arranged on a foundation base surface so that the outer edge and the foundation base surface delimit the interior.

5. The semi-finished part (200) as claimed in at least one of the two preceding claims, **characterized in that** the outer edge is designed to be substantially annular.

6. The semi-finished part (200) as claimed in the preceding claim, **characterized in that** the semi-finished part foundation segments (300) are substantially identical and/or configured substantially as ring segments and/or circle segments.

7. The semi-finished part (200) as claimed in at least one of the preceding claims 3-6, **characterized by** an inner limiting element (220) connected to the reinforcement (230), wherein the inner limiting elements (220) of the semi-finished part foundation segments (300) form an inner edge.

8. The semi-finished part (200) as claimed in at least one of the preceding claims 3-7, **characterized in that** portions of reinforcements (230) of adjacent semi-finished part foundation segments (300) overlap.

9. The semi-finished part (200) as claimed in at least one of the preceding claims 3-8, **characterized in that** the reinforcement (230) of at least one semi-finished part foundation segment (300) also comprises introduced reinforcing elements.

10. The semi-finished part (200) as claimed in at least one of the preceding claims 3-9, **characterized in that** at least one semi-finished part foundation segment (300) comprises at least one functional element.

11. A foundation with a semi-finished part (200) as claimed in at least one of claims 3 to 10 arranged on a foundation base surface, wherein an interior of the semi-finished part (200) is filled with curable casting compound.

12. A use of a semi-finished part foundation segment (300) as claimed in at least one of claims 1 to 2 to produce a semi-finished part (200) as claimed in at least one of claims 3 to 10 for a foundation (120) of a tower construction, and/or to produce a foundation (120) as claimed in the preceding claim.

13. A method for producing a semi-finished part (200) as claimed in at least one of claims 3 to 10, comprising the steps:
- preparation of a foundation base surface,
- production and/or provision of at least two semi-finished part foundation segments (300) as claimed in at least one of claims 1 to 2, and
- arrangement of the semi-finished part foundation segments (300) on the foundation base surface.

14. A method for producing a foundation (120) with the steps:
- production of a semi-finished part (200) as claimed in the preceding claim,
- filling of an interior of the semi-finished part (200) with curable casting compound, and
- curing of the casting compound.

## Revendications

1. Segment de fondation de pièce semi-finie (300) pour une pièce semi-finie (200), comprenant
- un élément de délimitation extérieure (210) et
- une armature (230) reliée à l'élément de délimitation extérieure (210), qui comprend des entretoises (321, 322) faisant saillie de l'élément de délimitation extérieure (210) ;
- dans lequel l'élément de délimitation extérieure (210) est réalisé pour former, à l'état monté, une partie d'un bord extérieur de la pièce semi-finie (200), qui délimite un espace intérieur à remplir ultérieurement d'une masse à sceller durcissable, dans lequel l'armature (230) s'étend du bord extérieur dans l'espace intérieur,
- dans lequel le segment de fondation de pièce semi-finie (300) est totalement dépourvu d'un élément de semelle inférieur, à l'état monté, **caractérisé en ce que**
- l'élément de délimitation extérieure est configuré de manière plate et présente une extension, dans un plan de surface en direction d'une hauteur et d'une largeur de l'élément de délimitation extérieure, qui est plusieurs fois plus grande qu'une extension en direction d'une épaisseur de l'élément de délimitation extérieure, dans lequel la hauteur de l'élément de délimitation extérieure s'étend, à l'état monté, sensiblement dans la direction verticale.

2. Segment de fondation de pièce semi-finie (300) selon la revendication précédente, comprenant une unité de support reliée aux entretoises, disposée sensiblement coaxialement par rapport à l'élément de délimitation extérieure (210).

3. Pièce semi-finie (200) pour une fondation (120) d'une structure de tour, en particulier d'une tour d'éolienne (100, 102), comprenant au moins deux segments de fondation de pièce semi-finie (300) avec respectivement
- un élément de délimitation extérieure (210) et
- une armature (230), reliée à l'élément de délimitation extérieure (210), qui comprend des entretoises (321, 322) faisant saillie de l'élément de délimitation extérieure (210),
dans laquelle les éléments de délimitation extérieure (210) des segments de fondation de pièce semi-finie (300) forment un bord extérieur qui délimite un espace intérieur à remplir ultérieurement de masse à sceller durcissable, et
dans laquelle les armatures (230) des segments de fondation de pièce semi-finie (300) s'étendent du bord extérieur dans l'espace intérieur,
dans laquelle les segments de fondation de pièce semi-finie (300) sont totalement dépourvus d'éléments de semelle inférieurs, à l'état monté,
**caractérisée en ce que**
l'élément de délimitation extérieure est configuré de manière plate et présente une extension dans un plan de surface en direction d'une hauteur et d'une largeur de l'élément de délimitation extérieure qui est plusieurs fois plus grande qu'une extension en direction d'une épaisseur de l'élément de délimitation extérieure, dans laquelle la hauteur de l'élément de délimitation extérieure, à l'état monté, s'étend sensiblement en direction verticale.

4. Pièce semi-finie (200) selon la revendication précédente, **caractérisée en ce que** les segments de fondation de pièce semi-finie (300) peuvent être disposés sur une surface de base de fondation si bien que le bord extérieur et la surface de base de fondation délimitent l'espace intérieur.

5. Pièce semi-finie (200) selon au moins l'une des deux revendications précédentes, **caractérisée en ce que** le bord extérieur est réalisé de manière essentiellement annulaire.

6. Pièce semi-finie (200) selon la revendication précédente, **caractérisée en ce que** les segments de fondation de pièce semi-finie (300) sont sensiblement de construction identique et/ou sont réalisés sensiblement en tant que segments annulaires et/ou segments circulaires.

7. Pièce semi-finie (200) selon au moins l'une des revendications 3 à 6 précédentes, **caractérisée par** un élément (220) de délimitation intérieure relié à l'armature (230), dans laquelle les éléments de délimitation intérieure (220) des segments de fondation de pièce semi-finie (300) forment un bord intérieur.

8. Pièce semi-finie (200) selon au moins l'une des revendications 3 à 7 précédentes, **caractérisée en ce que** des sections d'armatures (230) de segments de fondation de pièce semi-finie (300) adjacents se chevauchent.

9. Pièce semi-finie (200) selon au moins l'une des revendications 3 à 8 précédentes, **caractérisée en ce que** l'armature (230) d'au moins un segment de fondation de pièce semi-finie (300) comprend des éléments d'armature insérés en supplément.

10. Pièce semi-finie (200) selon au moins l'une des revendications 3 à 9 précédentes, **caractérisée en ce qu'**au moins un segment de fondation de pièce semi-finie (300) comprend au moins un élément fonctionnel.

11. Fondation avec une pièce semi-finie (200) disposée sur une surface de base de fondation selon au moins l'une des revendications 3 à 10, dans laquelle un espace intérieur de la pièce semi-finie (200) est rempli d'une masse à sceller durcie.

12. Utilisation d'un segment de fondation de pièce semi-finie (300) selon au moins l'une quelconque des revendications 1 et 2 pour la fabrication d'une pièce semi-finie (200) pour une fondation (120) d'une structure de tour selon au moins l'une quelconque des revendications 3 à 10 et/ou pour la fabrication d'une fondation (120) selon la revendication précédente.

13. Procédé de fabrication d'une pièce semi-finie (200) selon au moins l'une quelconque des revendications 3 à 10, comprenant les étapes :
- de préparation d'une surface de base de fondation,
- de fabrication et/ou mise à disposition d'au moins deux segments de fondation de pièce semi-finie (300) selon au moins l'une quelconque des revendications 1 à 2 et
- de disposition des segments de fondation de pièce semi-finie (300) sur la surface de base de fondation.

14. Procédé de fabrication d'une fondation (120) avec les étapes :
- de fabrication d'une pièce semi-finie (200) selon la revendication précédente,
- de remplissage d'un espace intérieur de la pièce semi-finie (200) avec de la masse à sceller durcissable et
- de durcissement de la masse à sceller.
